Europäisches Patentamt

European Patent Office

Office européen des brevets

(19)

(11) Numéro de publication : **0 179 702**
**B1**

(12) **FASCICULE DE BREVET EUROPÉEN**

(45) Date de publication du fascicule du brevet :
26.04.89

(51) Int. Cl.⁴ : **C 08 G 63/54**

(21) Numéro de dépôt : **85401932.0**

(22) Date de dépôt : **03.10.85**

(54) **Procédé de fabrication de résines polyesters insaturés présentant un mûrissement linéaire avec la magnésie.**

(30) Priorité : **12.10.84 FR 8415645**

(43) Date de publication de la demande :
**30.04.86 Bulletin 86/18**

(45) Mention de la délivrance du brevet :
**26.04.89 Bulletin 89/17**

(84) Etats contractants désignés :
**AT BE CH DE GB IT LI LU NL SE**

(56) Documents cités :
**EP—A— 0 023 634**
**NL—A— 7 705 205**
**US—A— 3 196 131**
**Le dossier contient des informations techniques présentées postérieurement au dépôt de la demande et ne figurant pas dans le présent fascicule.**

(73) Titulaire : **NORSOLOR S.A.**
**Tour Aurore Place des Reflets**
**F-92080 Paris la Defense Cédex 5 (FR)**

(72) Inventeur : **Canard, Pierre**
**14 Bosquet St Lazare**
**F-02300 Autreville (FR)**

(74) Mandataire : **Rieux, Michel**
**c/o NORSOLOR Service Propriété Industrielle B.P. 57**
**F-62670 Mazingarbe (FR)**

**Description**

La présente invention concerne un procédé de fabrication de résines polyesters insaturés présentant un mûrissement linéaire avec la magnésie. Elle a plus particulièrement pour objet un procédé de fabrication de résines polyesters à base d'anhydride orthophtalique qui présente un mûrissement linéaire avec la magnésie quel que soit le taux de magnésie mis en oeuvre.

Les résines polyesters sont des produits connus qui sont utilisés dans diverses applications en particulier pour la fabrication de matériaux préimprégnés. Ces derniers matériaux sont fabriqués à partir de fibres de renforcement et à partir de résines polyesters insaturés qui jouent le rôle de compositions d'imprégnation. Afin d'obtenir un matériau qui puisse être manipulé et stocké avant moulage, il est connu d'ajouter un épaississant à la composition d'imprégnation avant imprégnation des fibres de renforcement.

Ces compositions d'imprégnation sont jusqu'à présent préparées en faisant réagir au moins un polyol avec un ou plusieurs acides ou anhydrides polycarboxyliques non saturés en α, β et éventuellement un ou plusieurs acides ou anhydrides polycarboxyliques saturés. Le polycondensat ainsi obtenu est mis ensuite en solution dans un monomère vinylique réticulant. Comme polyols utilisés, on peut citer l'éthylène-glycol, le propylène-glycol, le diéthylène-glycol, le triéthylène-glycol, le tétraéthylène-glycol, le néopentyl-glycol, les butylènes-glycols, le dipropylène-glycérol, le triméthylopropane, le pentaérythritol, le triméthylpentanediol, le triméthylpropanediol 1-6 hexaméthylènediol, le bisphénol A hydrogéné et ses dérivés. Les acides et anhydrides polycarboxyliques non saturés α, β sont représentés plus particulièrement par les acides et anhydrides maléique, itaconique et les acides fumarique et mésaconique. Comme acides et anhydrides polycarboxyliques saturés on peut citer les acides et anhydrides succinique, méthylsuccinique, adipique, sébacique, orthophtalique tétrachlorophtlique, hexachloro-endométhylène-tétrahydrophtalique, trimellique et l'acide isophtalique. Le monomère vinylique réticulant mis en oeuvre est choisi parmi le styrène l'α méthylstyrène, les dérivés chlorés du styrène, le vinyltoluène, le divinylbenzène, le phtalate d'allyle, le cyanurate de triallyle, les acrylates et méthacrylates d'alkyles inférieurs.

Dans la réalité parmi tous ces monomères précédemment cités les compositions d'imprégnation sont le plus souvent fabriquées en faisant réagir en une seule étape un mélange de polyols constitué de propylène-glycol ou d'éthylène-glycol et de diéthylène-glycol avec un mélange d'anhydride maléïque et d'anhydride orthophtalique. Le polycondensat ainsi obtenu est mis en solution dans le styrène contenant de faibles doses d'un inhibiteur tel que hydroquinone ou benzoquinone (50 à 150 ppm).

Les matériaux préimprégnés sont des composés constitués principalement d'un mélange de résine polyester insaturée, de charge, de colorant, d'agent de démoulage, de fibres de verre, d'agent de réticulation et d'agent épaississant. Cette composition, initialement liquide, n'est pas suffisamment manipulable pour être moulée telle quelle. Préalablement au moulage on doit lui faire subir un mûrissement en vue d'augmenter sa viscosité. Un des procédés de mûrissement connu consiste à fabriquer un matériau sandwich constitué de la composition de préimprégné, qui doit conserver ses facultés de polymérisation et de réticulation, comprise entre deux films de polyéthylène. L'agent épaississant provoque une augmentation de viscosité qui rend manipulable le matériau sandwich après un certain temps.

Après mûrissement, et dans le cas de celui cité précédemment : élimination des films de polyéthylène, les matériaux préimprégnés peuvent être moulés selon les procédés habituels de moulage par compression à chaud, la réticulation étant obtenue par décomposition de l'agent de réticulation qui est en général un peroxyde organique.

L'agent épaississant introduit pour le mûrissement provoque une augmentation de la viscosité des préimprégnés qui doit être telle que la viscosité soit suffisante pour permettre le moulage. Si la viscosité est insuffisante, on observe des fuites importantes de matières sur les moules, et, si la viscosité est trop élevée le fluage des préimprégnés dans le moule se fait mal ce qui provoque un défaut d'aspect et de mauvaises propriétés mécaniques de la pièce moulée. De façon plus précise on observe que lorsque l'on fait varier le taux de magnésie avec les résines insaturées connues :

— à temps donné pas de mûrissement au-dessous d'un certain taux de magnésie, le mûrissement apparaissant à partir d'un certain seuil,

— après un certain temps de stockage une perte de plasticité quel que soit le taux de magnésie mis en oeuvre ce qui provoque des variations non linéaires du mûrissement.

Le besoin se fait donc sentir de disposer de résines polyesters insaturés qui présentent un mûrissement linéaire quel que soit le taux d'oxyde ou d'hydroxyde métallique mis en oeuvre ce qui permet d'ajuster le taux de l'oxyde ou d'hydroxyde métallique au niveau de mûrissement prédéfini.

La présente invention concerne un procédé de fabrication de résines polyesters insaturés présentant un mûrissement linéaire avec la magnésie selon lequel on fait réagir dans une première étape au moins un polyol avec un ou plusieurs acides ou anhydrides carboxyliques non saturés en α, β et avec un ou plusieurs acides ou anhydrides polycarboxyliques saturés, le polycondensat obtenu étant mis en solution dans un monomère vinylique caractérisé en ce que on fait réagir dans une première étape un mélange de polyols constitué de propylène glycol et de diéthylène glycol, la quantité de glycols mis en oeuvre dans cette première étape étant au plus égale à 30 % en poids par rapport à la quantité totale mise en oeuvre dans le procédé, les pourcentages respectifs lors de cette première étape étant compris entre 0 à 20 % pour le diéthylène glycol, et 10 % à 30 %, pour le propylène glycol ce mélange de glycols étant mis à réagir avec la totalité d'un anhydride polycarboxylique saturé constitué par l'anhydride orthophtalique, puis on fait réagir dans une deuxième étape le produit de la réaction obtenu lors de la première étape avec le restant de diéthylène glycol et de propylène-glycol et la totalité d'un anhydride non saturé $\alpha$, $\beta$ constitué par l'anhydride maléïque.

On a trouvé qu'en opérant dans ces conditions, on obtient des résines polyesters insaturés qui présentent un mûrissement à la magnésie linéaire. Par ailleurs, les résines obtenues selon l'invention permettant d'ajuster le taux de mûrissement linéaire quel que soit le taux de magnésie mis en oeuvre. Un tel comportement vis-à-vis de la magnésie permet un plus large éventail d'utilisation dans les préimprégnés de résines obtenues selon l'invention. Les quantités de magnésie utilisées sont celles que l'on emploie de façon classique : elles sont comprises entre 0,5 et 2 % et de préférence entre 0,7 et 1,25 % par rapport au poids de la résine. Par ailleurs les résines polyesters préparées selon l'invention conviennent particulièrement bien pour la fabrication de compounds injectables dont la fabrication nécessite de disposer de résines polyesters insaturés qui doivent présenter une consistance :

— ni trop faible pour permettre un dosage correct et régulier du matériau et un bon comportement rhéologique lors de l'injection,

— ni trop élevée pour permettre une alimentation aisée du matériau dans la vie et une dégradation minimum des fibres de verre.

Selon l'invention la première étape est réalisée en utilisant un mélange de polyols constitué de propylène glycol et de diéthylène glycol, la quantité de glycols mis en oeuvre dans cette première étape étant au plus égale à 30 % en poids par rapport à la quantité totale mise en oeuvre dans le procédé, les pourcentages respectifs lors de cette première étape étant compris entre 0 à 20 % pour le diéthylène glycol, et de 10 à 30 % pour le propylène glycol.

Selon le procédé de l'invention on fait réagir le mélange de polyols ainsi défini avec la totalité de l'anhydride orthophtalique. Cette réaction est conduite de façon connue à une température comprise entre 160 et 220° C et de préférence voisine de 200° C pendant une durée de préférence voisine de 6 heures. Selon l'invention le produit obtenu lors de la première étape est mis à réagir avec le restant de diéthylène glycol et de propylène glycol avec la totalité d'anhydride maléïque. Cette deuxième étape est conduite à une température de 180 à 220° C pendant 10 et 12 heures.

Les quantités des réactifs nécessaires à la mise en oeuvre de l'invention sont des quantités classiques utilisées dans la fabrication des résines polyesters insaturés. Le diéthylène glycol et le propylène glycol sont utilisés en toutes proportions. Les rapports molaires polyol : anhydride orthophtalique sont de 1 : 0,5-0,05 et les rapports molaires polyol : anhydride maléïque sont de 1 : 0,5-0,95.

Les résines polyesters obtenues selon le procédé de l'invention conduisent à des résines présentant un mûrissement linéaire avec la magnésie et de ce fait une bonne maîtrise du mûrissement et un ajustement précis du palier de viscosité dans des domaines compatibles avec la transformation par injection.

De telles résines permettent la fabrication de matériaux préimprégnés injectables à la magnésie présentant un bon comportement au moulage et de bonnes caractéristiques mécaniques selon les techniques connues de :

— moulage de matelas de résine et de fibres de verre imprégnées (en anglais sheet molding compound : S.M.C., ou thick molding compound : T.M.C.

— moulage de résine et fibres de verre imprégnées en vrac (en anglais bulk molding compound : B.M.C.)

De façon connue les fibres de renforcement mises en œuvre pour la fabrication de préimprégnés sont représentées par les fibres naturelles telles que lin, amiante, jute, coton et les fibres synthétiques telles que nylon, verre, carbone, graphite, papier. Employées seules ou en mélange ces fibres peuvent se présenter sous forme de brins, fils, mats ou tissus.

Les exemples suivants illustrent la présente invention. Le mûrissement des résines obtenues selon l'invention est évalué en soumettant la résine au test du « pénetromètre ».

Ce test est mis en oeuvre en utilisant un « pénetromètre » qui est constitué :

— d'une tige support

— d'un socle monté sur cette tige

— d'une tige porte outil surmontée d'un cadran gradué fixé sur la tige support : la tige porte outil a un outil constitué d'un cylindre de 340 g présentant un diamètre de 1 cm.

On prépare un mélange de 100 grammes de résine et 100 g de carbonate de calcium broyé. On introduit ensuite x pour cent de MgO « Maglite DE » (produit vendu par la société MERCK) : les valeurs de x sont à chaque essai égales à 0,8-0,9-1,0-1,1 et 1,2. Les mesures sont réalisées entre le 1er et le 28ème jour en notant le temps correspondant à une pénétration de 15 millimètres de l'outil dans le mélange à une température égale à 23°C.

## EXEMPLE 1

On prépare un polycondensat en condensant dans une première étape :
- 2873 parties de propylène-glycol

- 2968 parties de diéthylène-glycol
- 3730 parties d'anhydride orthophtalique à une température de 200° C pendant 5 heures.

Dans une deuxième étape on ajoute 6065 parties de propylène-glycol et 11250 parties d'anhydride maléïque. La condensation est conduite à une température de 215 °C pendant 5 heures sous une pression de 200 mm de mercure. On obtient 19850 parties de polycondensat que l'on met en solution dans 11500 parties de styrène. La résine obtenue présente les caractéristiques suivantes :

— viscosité: 1,97 Pa. s à 25°C
— indice d'acide : 31,2 (masse)
— écart entre l'indice d'acide et l'indice d'hydroxyde : + 1
— Poids moléculaire : 1825.

La résine obtenue est soumise au test du pénetromètre. La courbe 1 donne les résultats pour différentes valeurs de x précédemment définies.

## EXEMPLE 2

L'exemple 1 est répété mais en conduisant la condensation de la première étape pendant 6 h 30 et en mettant en oeuvre 6278 parties de propylène-glycol pendant la deuxième étape au lieu de 6065, toutes les autres valeurs étant identiques à celles de l'exemple 1.

On obtient après mise en solution dans le styrène une résine qui présente les caractéristiques suivantes :

— viscosité : 1,93 Pa. s à 25°C
— indice d'acide : 28
— masse écart entre indice d'acide et indice d'hydroxyle : — 5
— poids moléculaire : 1840

La courbe 2 donne les résultats des tests au pénetromètre.

## EXEMPLE 3

L'exemple 1 est répété mais en chargeant tout le propylène-glycol lors de la première étape qui est conduite aussi à 200°C pendant 7 heures.

La résine obtenue présente les caractéristiques suivantes :

— viscosité : 2,8 Pa. s à 25 °C
— indice d'acide : 51
— écart entre l'indice d'acide et l'indice d'hydroxyle : + 40
— poids moléculaire : 1810

La courbe 3 donne les résultats des tests obtenus au pénetromètre.

## EXEMPLE 4

L'exemple 1 est répété mais en conduisant la 1ère étape pendant 6 heures, et en ajoutant 6384 parties de propylène-glycol lors de la deuxième étape.

La résine obtenue présente les caractéristiques suivantes :

— viscosité: 2,19 Pa. s à 25° C.
— indice d'acide : 20,75
— écart entre indice d'acide et indice d'hydroxyle : — 18,5
— poids moléculaire : 1870

La courbe 4 donne les résultats des tests obtenus au pénetromètre.

## EXEMPLE 5

A titre comparatif on prépare une résine en utilisant de façon connue de l'anhydride isophtalique au lieu d'anhydride orthophtalique. Dans une première étape conduite à 220° C pendant 6 heures on met en oeuvre :

— 5681 parties de propylène-glycol
— 6201 parties de diéthylène-glycol
— 8632 parties d'anhydride isophtalique.

Le produit obtenu lors de la première étape est ensuite condensé avec 7644 parties d'anhydride maléïque. Après condensation à 225° C sous un vide de 150 mm de mercure on obtient après mise en solution dans le styrène à raison de 60 % de résine pour 40 % de styrène, une résine qui présente les caractéristiques suivantes :

— viscosité: 1,2 Pa. s à 25°C
— indice d'acide : 20
— écart entre l'indice d'acide et l'indice d'hydroxyle : — 5
— poids moléculaire : 2300

La courbe 5 donne les résultats des tests au pénetromètre.

## EXEMPLE 6

L'exemple 4 est répété mais en additionnant tous les réactifs en une seule étape. Après traitement on obtient une résine qui présente les caractéristiques suivantes :
— viscosité: 2 Pa. s à 25°C
— indice d'acide : 24,1
— écart entre l'indice d'acide et l'indice d'hydroxyle : — 20
— poids moléculaire : 1645

La courbe 6 donne les résultats des tests au pénétromètre : on constate à 15 jours une chute de la courbe caractérisée par une amorce de ramolissement.

Une telle chute n'apparaît pas en mettant en oeuvre le procédé en deux étapes.

## EXEMPLE 7

On prépare un polycondensat en condensant dans une première étape
— 1424 parties de diéthylène-glycol
— 4086 parties de propylène glycol
— 3575 parties d'anhydride orthopthalique à une température de 200°C pendant 5 h 30 minutes.

Dans une deuxième étape on ajoute 5107 parties de propylène-glycol et 10793 parties d'anhydride maléïque. La condensation est conduite à une température de 215°C pendant 9 heures sous une pression de 250 mm de mercure.

Le polycondensat est mis en solution dans 16600 parties de styrène. La résine obtenue présente les caractéristiques suivantes :
— viscosité : 3 Pa. s à 25°C
— indice d'acide : 27 (masse)
— écart entre l'indice d'acide et l'indice d'hydroxyle : — 16,5
— poids moléculaire : 1590

La courbe 7 donne les résultats d'essai des tests au pénétromètre.

## EXEMPLE 8

L'exemple 7 est répété mais en omettant le diéthylène glycol. On met en oeuvre dans une première étape :
— 4877 parties de propylène glycol
— 3633 parties d'anhydride phtalique dans une deuxième étape :
— 5502 parties de propylène glycol
— 10.978 parties d'anhydride maléïque.

Après condensation, la résine obtenue après dissolution dans le styrène à raison de 60 parties de résine pour 40 parties de styrène présente les caractéristiques suivantes :
— Viscosité: 2,8 Pa. s
— Indice d'acide : 26,7 (masse)
— Ecart entre l'indice d'acide et l'indice d'hydroxyle : — 17,3
— Poids moléculaire : 1585

La courbe 8 donne les résultats d'essai au pénétromètre.

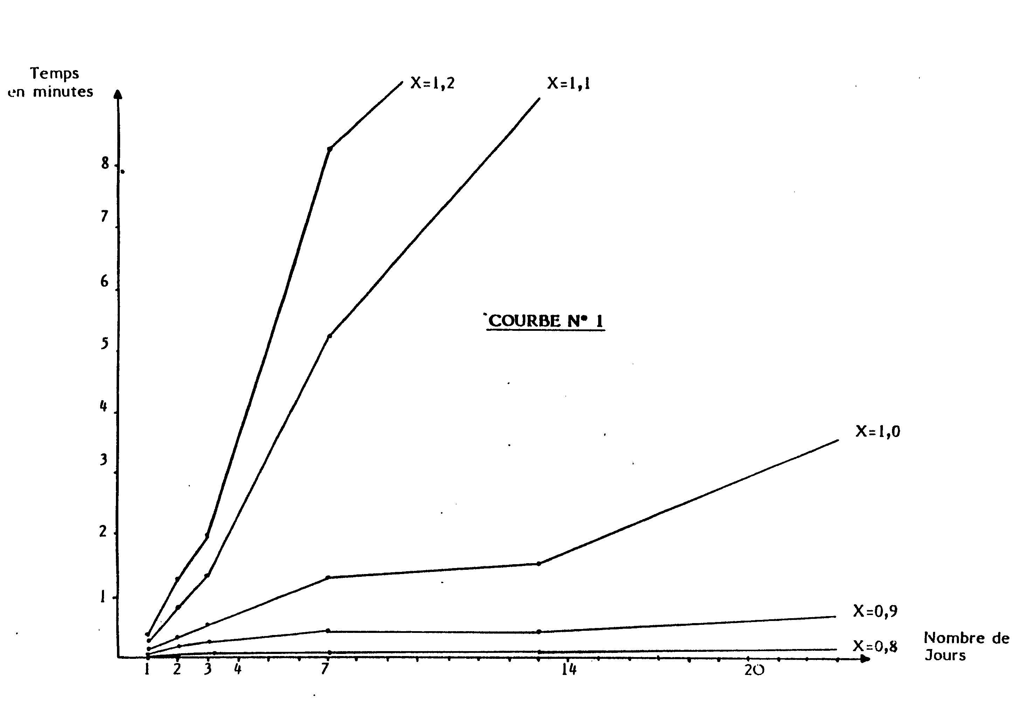

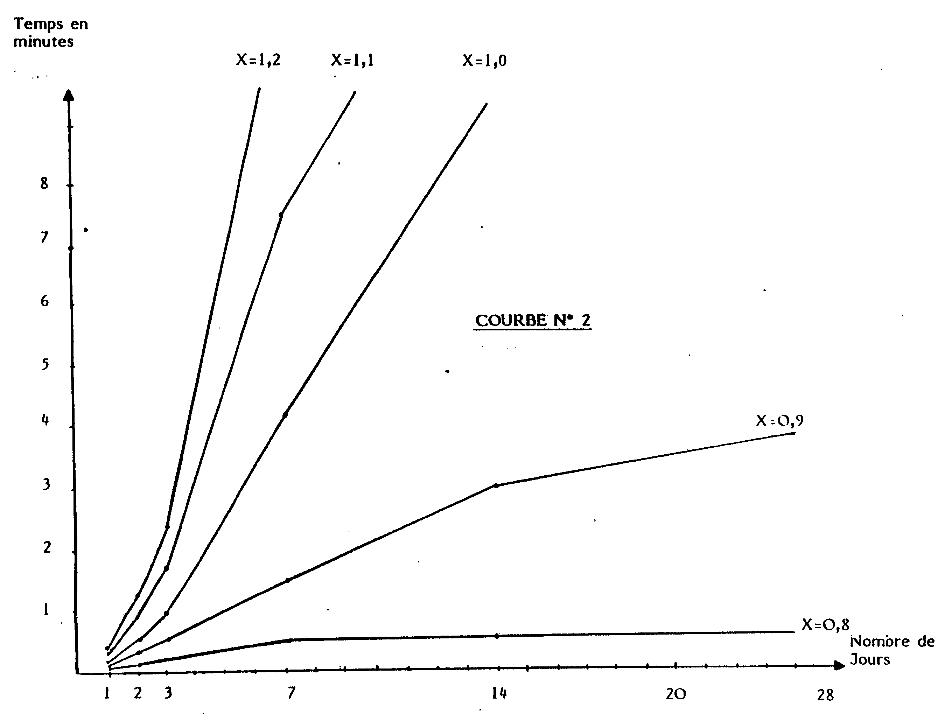

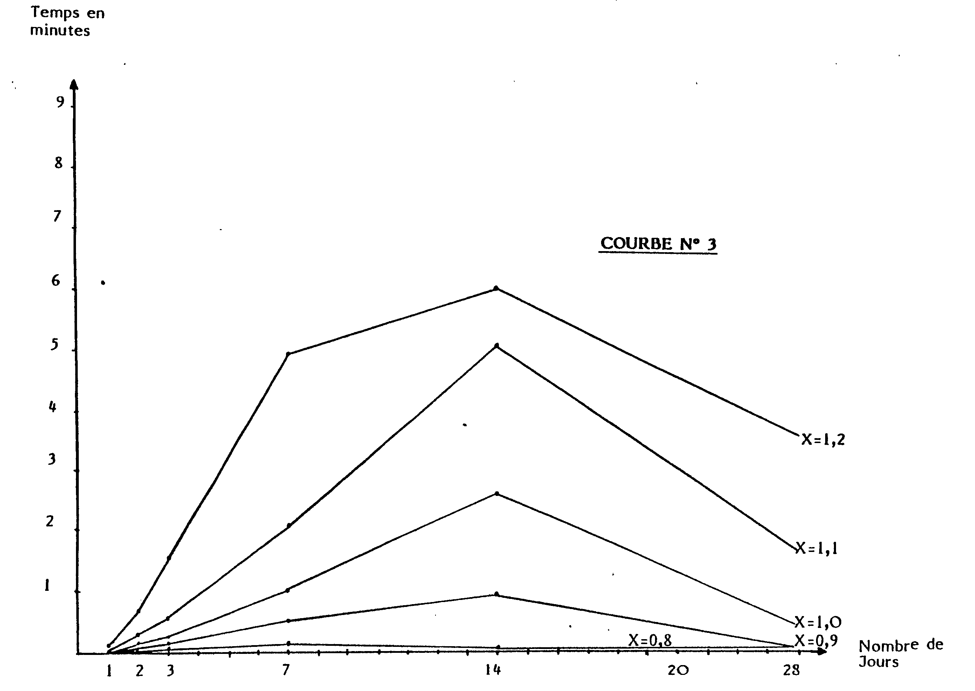

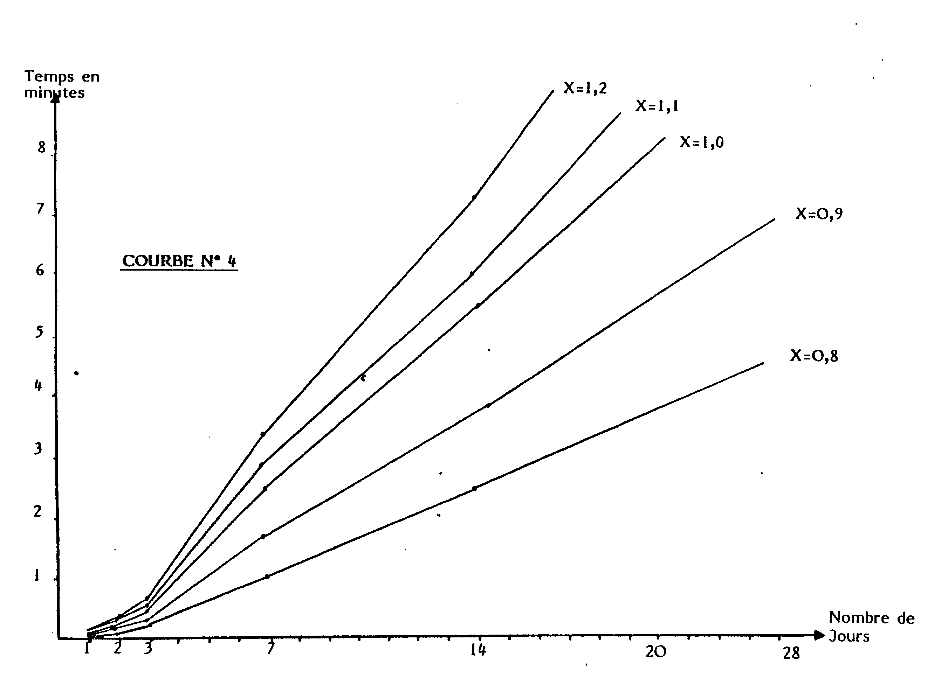

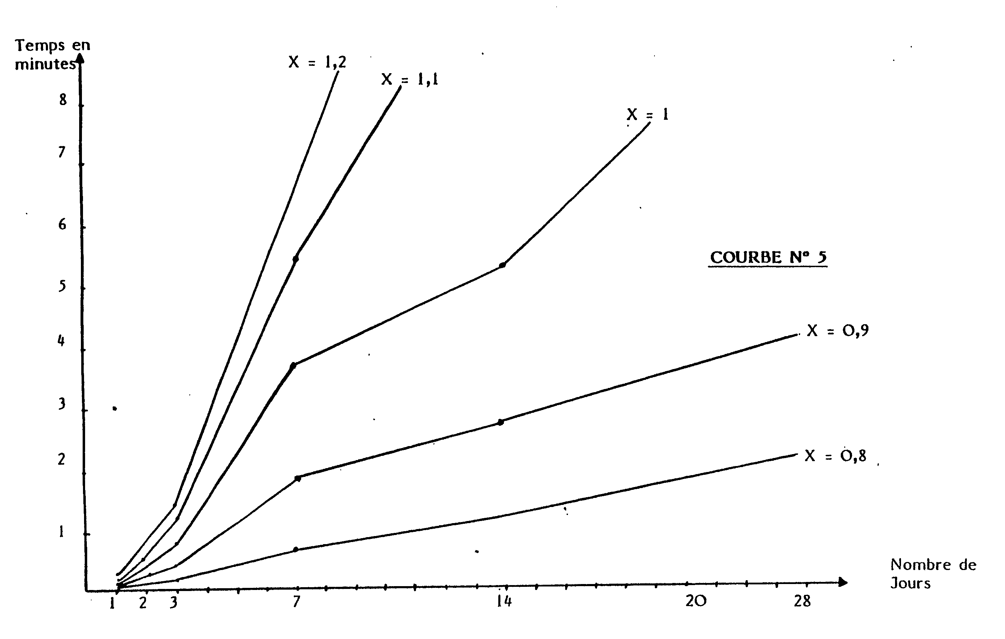

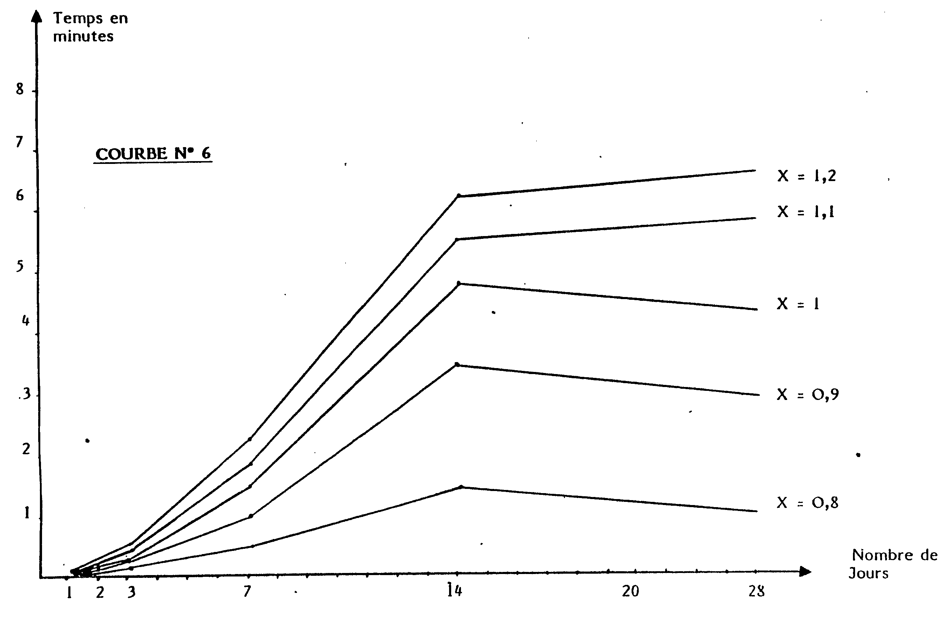

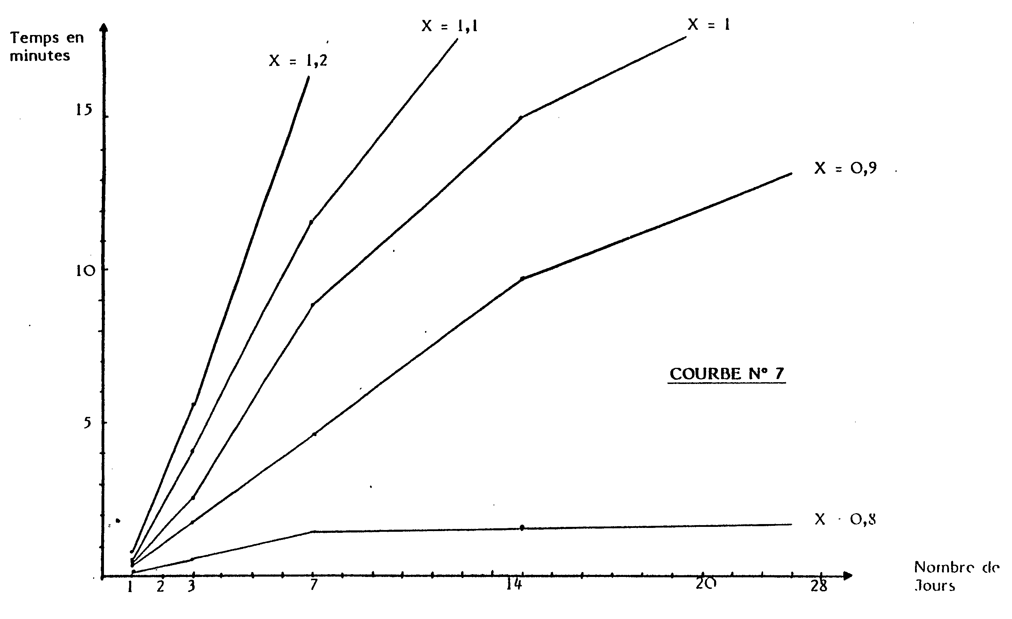

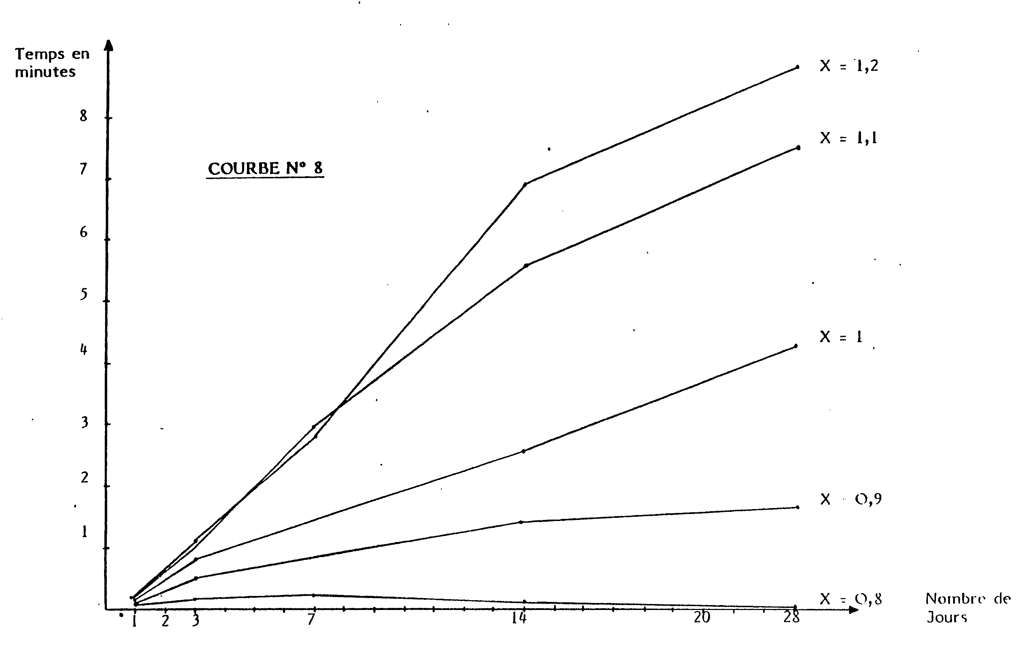

**Revendications**

1. Procédé de fabrication de résines polyesters insaturés selon lequel on fait réagir un mélange de polyols constitué de propylène glycol ou d'éthylène glycol et de diéthylène glycol avec un mélange d'anhydride maléïque et d'anhydride orthophtalique, le polycondensat obtenu étant mis en solution dans un monomère vinylique
caractérisé en ce que l'on fait réagir dans une première étape un mélange de polyols constitué de propylène glycol et de diéthylène glycol, la quantité de glycols mise en oeuvre dans cette première étape étant au plus égale à 30 % en poids par rapport à la quantité totale mise en oeuvre dans le procédé, les pourcentages respectifs lors de cette première étape étant compris entre 0 à 20 % pour le diéthylène glycol, et 10 % à 30 % pour le propylène glycol ce mélange de glycols étant mis à réagir avec la totalité d'un anhydride polycarboxylique saturé constitué par l'anhydride orthopthalique,
puis on fait réagir dans une deuxième étape le produit de la réaction obtenu lors de la première étape avec le restant de diéthylène glycol et de propylène-glycol et la totalité d'un anhydride non saturé $\alpha, \beta$ constitué par l'anhydride maléïque.

2. Procédé selon 1, selon lequel l'anhydride orthopthalique est utilisé avec les polyols dans les rapports molaires

$$\frac{Polyols}{anhydride\ orthopthalique} = \frac{1}{0,5\text{-}0,05}.$$

## Claims

1. Process for the manufacture of unsaturated polyester resins, according to which a mixture of polyols consisting of propylene glycol or of ethylene glycol and of diethylene glycol is reacted with a mixture of maleic anhydride and of ortho-phthalic anhydride, the polycondensate obtained being dissolved in a vinyl monomer

characterized in that a mixture of polyols consisting of propylene glycol and of diethylene glycol is reacted in a first stage, the quantity of glycols used in this first stage being not more than 30 % by weight relative to the total quantity used in the process, the respective percentages during this first stage being between 0 to 20 % in the case of diethylene glycol and 10 % to 30 % in the case of propylene glycol, this mixture of glycols being reacted with the totality of a saturated polycarboxylic anhydride consisting of orthophthalic anhydride, and the reaction product obtained during the first stage is then reacted in a second stage with the remainder of diethylene glycol and of propylene glycol and the totality of an $\alpha,\beta$-unsaturated anhydride consisting of maleic anhydride.

2. Process according to 1, according to which ortho-phthalic anhydride is employed with the polyols in the molar ratios

$$\frac{polyols}{ortho\text{-}phthalic\ anhydride} = \frac{1}{(0.5\text{-}0.05)}.$$

## Patentansprüche

1. Verfahren zur Herstellung von ungesättigten Polyesterharzen bei dem man ein Gemisch von Polyolen bestehend aus Propylenglykol oder Ethylenglykol und Diethylenglykol mit einem Gemisch von Maleinsäureanhydrid und Orthophthalsäureanhydrid reagieren läßt, wobei das erhaltene Kondensat in einem vinylischen Monomeren in Lösung gebracht wird,

dadurch gekennzeichnet, daß man in einem ersten Schritt ein Gemisch von Polyolen bestehend aus Propylenglykol und Diethylenglykol reagieren läßt, wobei die Menge der umgesetzten Glykole in diesem ersten Schritt höchstens 30 Gew.% bezogen auf die in diesem Verfahren umgesetzte Gesamtmenge beträgt, wobei die jeweiligen Prozentsätze bei diesem ersten Schritt 0 bis 20 % an Diethylenglykol und 10 % bis 30 % an Propylenglykol betragen, wobei dieses Gemisch von Glykolen mit der Gesamtmenge eines gesättigten Polycarbonsäureanhydrids bestehend aus Orthophthalsäureanhyrid umgesetzt wird, und man dann in einem zweiten Schritt das im ersten Schritt erhaltene Reaktionsprodukt mit dem Rest an Diethylenglykol und an Propylenglykol und mit der Gesamtmenge eines $\alpha,\beta$ ungesättigten Anhydrids bestehend aus Maleinsäureanhydrid umsetzt.

2. Verfahren nach Anspruch 1, bei dem das Orthophthalsäureanhydrid mit den Polyolen in molaren Verhältnissen von

$$\frac{Polyolen}{Orthophthalsäureanhydrid} = \frac{1}{0,5\text{-}0,05}$$

verwendet wird.

COURBE N° 1

COURBE N° 2

COURBE N° 3

COURBE N° 4

EP 0 179 702 B1

COURBE N° 5

X = 1,2

X = 1,1

X = 1

X = 0,9

X = 0,8

Temps en minutes

Nombre de Jours

COURBE N° 6

Temps en minutes

X = 1,2
X = 1,1
X = 1
X = O,9
X = O,8

Nombre de Jours

EP 0 179 702 B1

COURBE N° 7

COURBE N° 8